# EUROPEAN PATENT APPLICATION

(11) **EP 4 772 393 A1**
(43) Date of publication of application: **08.07.2026**
(21) Application number: 25227725.6
(22) Date of filing: 30.12.2025
(51) Int. Cl.: B60N 2/28

(54) **CHILD SAFETY SEAT**

(30) Priority: 03.01.2025 CN 202510012848
(71) Applicant: Wonderland Switzerland AG, 6312 Steinhausen (CH)
(72) Inventor: LIANG, Jiajun, Dongguan, Guangdong, 523648 (CN)
(74) Representative: Pfenning, Meinig & Partner mbB

(57) **Abstract**

The present disclosure provides a child safety seat. The child safety seat includes a backrest (200, 200A), a seat part (300, 300A, 300D), a connecting device including a connector for engaging an anchor point of a vehicle seat, and a top tether device (500, 500A, 500B). The connector is disposed on the seat part (300, 300A, 300D) and is slidable between an extended position and a retracted position relative to the seat part (300, 300A, 300D). The top tether device (500, 500A, 500B) movably disposed on the child safety seat. The top tether device (500, 500A, 500B) includes a tether body (510, 510A), an anchor member (520), and a length adjuster (540). The tether body (510, 510A) has a first connecting end (511) connected to the anchor member (520) and extending outward from the backrest (200, 200A) and a second connecting end (512) connected to the connecting device. The length adjuster (540) is disposed between the first connecting end (511) and the second connecting end (512) to adjust a length of the tether body (510, 510A). The second connecting end (512) drives the connector to move toward the retracted position relative to the seat part (300, 300A, 300D) when the first connecting end (511) of the top tether device (500, 500A, 500B) is pulled outward from the backrest (200, 200A).

## Description

### TECHNICAL FIELD

The present disclosure relates to an infant product, and in particular, to a child safety seat.

### BACKGROUND

Child safety seats have now become an indispensable tool for children when traveling in vehicle. A child safety seat is usually provided with seat connecting devices such as ISOFIX and LATCH, and a top tether. In order to ensure that the child safety seat can be firmly and stably installed on the seat, the seat connecting device and the top tether need to be installed simultaneously, and cooperate with corresponding connection points on the vehicle seat. However, users may forget to install the top tether after installing the seat connecting device, resulting in potential safety hazards.

In addition, in order to install the child safety seat on different models of vehicles and enable it to fit a backrest of the seat to stably support the backrest of the child safety seat, the seat connecting device is usually capable of adjusting a length of a joint extending from the child safety seat.

### SUMMARY

The present disclosure provides a child safety seat. The child safety seat includes a backrest, a seat part, a connecting device, and a top tether device. The connecting device includes a connector for engaging an anchor point of a vehicle seat. The connector is disposed on the seat part and is slidable between an extended position and a retracted position relative to the seat part. The top tether device is movably disposed on the child safety seat. The top tether device includes a tether body, an anchor member, and a length adjuster. The tether body has a first connecting end connected to the anchor member and extending outward from the backrest and a second connecting end connected to the connecting device; and the length adjuster is disposed between the first connecting end and the second connecting end to adjust a length of the tether body. The second connecting end drives the connector to move toward the retracted position relative to the seat part when the first connecting end of the top tether device is pulled outward from the backrest.

In one embodiment, a number of the connectors is plural, the connecting device further includes a connecting bar, the connecting bar is connected among the plurality of connectors, and the second connecting end of the tether body is connected to the connecting bar.

In one embodiment, the connecting device further includes an elastic device configured to bias the connector in a direction toward the extended position; and a locking structure operable to lock the connector in the retracted position.

In one embodiment, one end of the elastic device is connected to the connecting bar.

In one embodiment, the connecting device further includes a locking structure operable to lock the connector in the extended position, an engaging member pivotally connected to the connector for engaging a connection point on the vehicle seat, and a driving member slidably disposed on the connecting device and in linkage cooperation with the engaging member. The driving member drives the locking structure to unlock along with pivoting of the engaging member when the engaging member is connected to the connection point on the vehicle seat and pivots.

In one embodiment, the locking structure includes a locking device disposed on the connector. The seat part of the child safety seat further includes a positioning hole for cooperating with the locking device. When the locking structure is in a locked position, the locking device is engaged with the positioning hole to lock the connector relative to the seat part of the child safety seat. When the locking structure is in an unlocked position, the locking device is disengaged from the positioning hole to enable the connector to move relative to the seat part of the child safety seat. The child safety seat further includes a sliding sleeve fixedly provided on the seat part of the child safety seat, the connector of the connecting device is slidable within the sliding sleeve, and the positioning hole is disposed on the sliding sleeve.

In one embodiment, the positioning hole includes a first positioning hole, when the locking device is engaged with the first positioning hole, the connector is maintained in the extended position protruding from the child safety seat, and when the engaging member provided on the connecting device is provided on the vehicle seat, the locking device is disengaged from the first positioning hole, such that the connector is slidable relative to the seat part of the child safety seat.

In one embodiment, the driving member has a first guiding surface. When the engaging member is engaged with the connection point on the vehicle seat and pivots, the driving member moves toward a direction close to the engaging member, and the first guiding surface abuts against the locking device to disengage the locking device from the first positioning hole.

In one embodiment, the positioning hole further includes a second positioning hole. When the locking device is engaged with the second positioning hole, the connector is maintained in the retracted position. The child safety seat further includes an unlocking operation member, the unlocking operation member is movably disposed on the child safety seat for driving the driving member. The driving member has a second guiding surface, the locking device is configured between the first guiding surface and the second guiding surface. When the unlocking operation member is operated, the driving member moves toward a direction away from the engaging member under driving of the unlocking operation member, such that the second guiding surface abuts against the locking device to be disengaged from the second positioning hole.

In one embodiment, a driving member reset member is disposed between the driving member and the connector, the driving member reset member biases the driving member. When the engaging member is engaged with the vehicle seat, the driving member moves toward a direction close to the engaging member under biasing of the driving member reset member, such that the locking device is unlocked.

In one embodiment, the child safety seat is provided with a guide member fixedly connected to the seat part and located in front of the connecting device, and after the tether body of the top tether device bypasses the guide member, the second connecting end is connected to the connecting device.

In one embodiment, the connecting device includes a LATCH device. The LATCH device has a first connecting end connected to a second connecting end of the tether body of the top tether device, and a second connecting end provided with a hook and capable of extending or retracting relative to the seat part of the child safety seat.

In one embodiment, the backrest is detachably connected to the seat part. The LATCH device is detachably connected to the tether body of the top tether device.

In one embodiment, the seat part further includes a latching device. The latching device includes a one-way pawl and an unlocking member. The one-way pawl is pivotally connected to the seat part and is capable of cooperating with a clamping groove provided on the connecting device. When the one-way pawl is engaged with the clamping groove, the latching device allows the connector to slide toward the folded direction and prevents the connector from sliding toward the unfolded direction. When the unlocking member is operated, the one-way pawl is disengaged from the clamping groove, such that the connector is freely slidable between the extended position and the retracted position relative to the seat part of the child safety seat.

In one embodiment, the child safety seat further includes a crotch strap, one end of the crotch strap is connected to the connecting bar, and the other end of the crotch strap passes through the seat part of the child safety seat and is exposed above the seat part.

In one embodiment, the child safety seat further includes a locking part disposed between the backrest and the tether body. The locking part is configured to allow the tether body to move from one side of the first connecting end and prevent the tether body from moving toward one side of the second connecting end.

The present disclosure provides a child safety seat. The child safety seat includes a seat part, a connecting device, and a locking structure. The connecting device includes a connector for engaging an anchor point of a vehicle seat, the connector is disposed on the seat part and is capable of moving between an extended position and a retracted position relative to the seat part. The locking structure is capable of locking the connector in the extended position. The connecting device has an engaging member and a driving member. The engaging member is pivotally connected to the connector for engaging a connection point on the vehicle seat. The driving member is slidably disposed on the connecting device, and one end of the driving member is in linkage cooperation with the engaging member. When the engaging member is connected to the connection point on the vehicle seat and pivots, the driving member drives the locking structure to be unlocked following the pivoting of the engaging member.

### BRIEF DESCRIPTION OF THE DRAWINGS

The accompanying drawings, which are incorporated into and constitute a part of this specification, illustrate embodiments consistent with the present disclosure, and serve to explain the principles of the present disclosure together with the description.
FIG. 1 shows a side schematic view of a child safety seat according to a first embodiment of the present disclosure, in which a ISOFIX device is in an extended position.
FIG. 2 shows another side perspective schematic view of the child safety seat shown in FIG. 1, in which the ISOFIX device is in a retracted position.
FIG. 3A shows a perspective schematic view of the child safety seat shown in FIG. 1 viewed from another angle.
FIG. 3B shows a cross-sectional view taken along line L-L in FIG. 3A.
FIG. 3C shows an enlarged partial view of FIG. 3B.
FIG. 4A shows a side cross-sectional schematic view of the child safety seat shown in FIG. 2.
FIG. 4B shows an enlarged partial view of FIG. 4A.
FIG. 5 shows a bottom perspective schematic view of the child safety seat according to the first embodiment of the present disclosure, in which a bottom cover of the seat part is removed to show an internal structure of the seat part.
FIG. 6A shows a bottom schematic view of the seat part shown in FIG. 5, including a partial cross-sectional view of the ISOFIX device in the extended position.
FIGS. 6B and 6C show enlarged partial cross-sectional views of the locking device shown in FIG. 6A in different states.
FIG. 7A shows a cross-sectional schematic view taken along line I-I in FIG. 6B.
FIG. 7B shows a cross-sectional schematic view taken along line II-II in FIG. 6C.
FIG. 8A shows another bottom schematic view of the seat part shown in FIG. 5, including a partial cross-sectional view of the ISOFIX device in the retracted position.
FIGS. 8B and 8C show enlarged partial schematic views of the locking device shown in FIG. 8A in different states.
FIGS. 9A and 9B show side perspective schematic views of child safety seats according to different examples of the first embodiment of the present disclosure.
FIG. 10 shows a partial cross-sectional schematic view of a child safety seat according to a second embodiment of the present disclosure.
FIG. 11 shows a schematic view of an ISOFIX device according to a first example of the third embodiment of the present disclosure.
FIG. 12 shows a schematic view of an ISOFIX device and a top tether device according to a second example of the third embodiment of the present disclosure.
FIG. 13 shows a bottom schematic view of a seat part of a child safety seat according to the fourth embodiment of the present disclosure.

The reference numerals are listed as follows:
child safety seat 1, 1A
   headrest 100
   backrest 200, 200A
      locking part 210A
   seat part 300, 300A, 300D
      guiding member 310, 310A
      opening 320D
   ISOFIX device 400, 400B
      ISOFIX connector 410, 410B
         engaging member 411, 411B
         driving member 413, 413B
         first guiding surface 4131
         second guiding surface 4132
         driving member reset member 414, 414B
         unlocking operating member 416
         pulling member 417
      locking device 420, 420B
         locking member 421
         fixing base 422
         reset spring 423
      connecting rod 430, 430D
      elastic device 440
      sliding sleeve 450
         first positioning hole 451
         second positioning hole 452
      latching device 460B
         one-way pawl 461B
         main body portion 4611B
         clamping finger part 4612B
      unlocking member 462B
      reset member 463B
   clamping groove 470B
LATCH device 400A
   tether body 410A
top tether device 500, 500A, 500B
   tether body 510, 510A
      first connecting end 511
      second connecting end 512, 512A
   anchor member 520
   length adjuster 540
crotch strap 600D

### DETAILED DESCRIPTION

Hereinafter, exemplary embodiments of the present disclosure will be described in detail with reference to the accompanying drawings. Although the present disclosure is available to various modifications and alternative forms, specific embodiments thereof are shown by way of example in the accompanying drawings. However, the present disclosure should not be construed as limiting the embodiments set forth herein. On the contrary, the present disclosure will cover all modifications, equivalents, and alternatives falling within the spirit and scope of the present disclosure.

The present disclosure will be described in detail below with reference to the accompanying drawings.

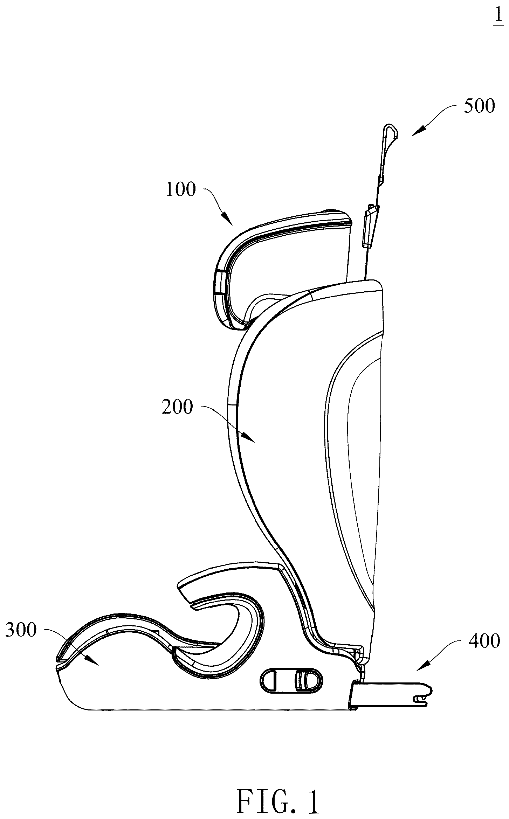

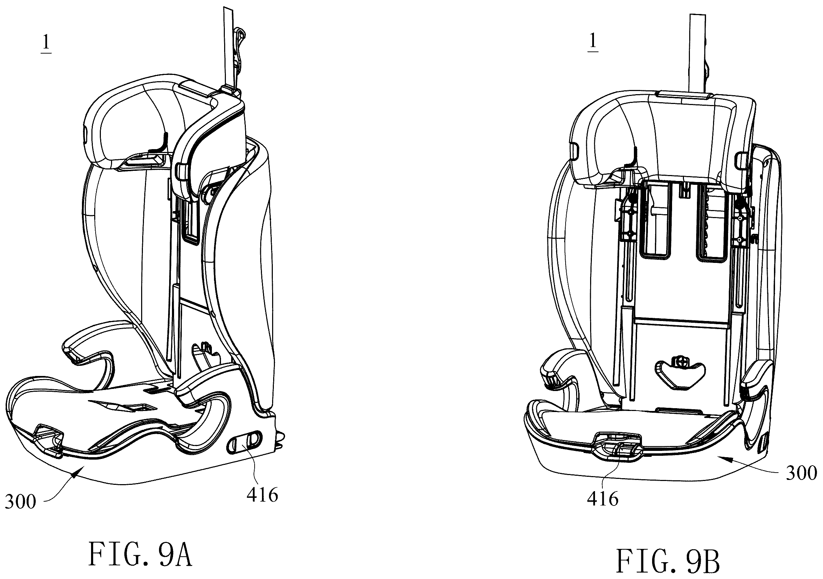

Referring to FIGS. 1 to 9B, a first embodiment of the present disclosure provides a child safety seat 1.

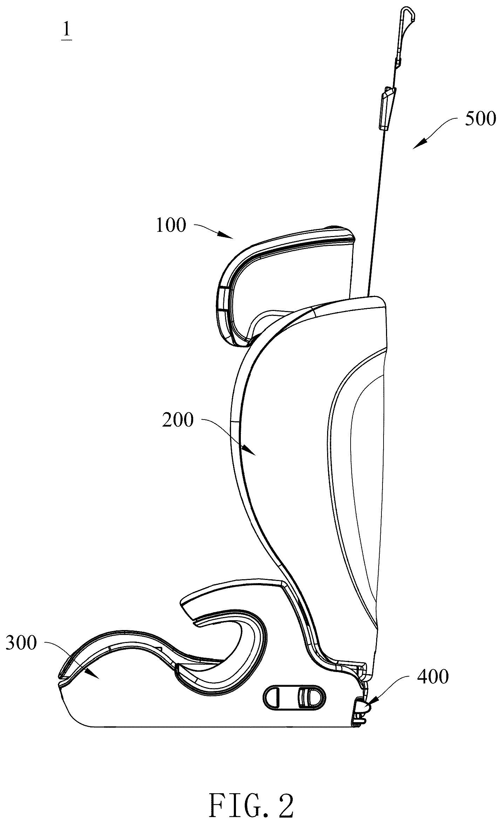

As shown in FIGS. 1 and 2, the child safety seat 1 includes a backrest 200 and a seat part 300. The backrest 200 is used to support the child's back, and the seat part 300 is used to support the child's buttocks to provide a seating space for the child. The backrest 200 (such as its lower end) is connected to the rear end of the seat part 300, for example, disposed above the rear end as shown in FIG. 1. When the child safety seat 1 is installed on a vehicle seat in a forward direction, the backrest 200 may abut against the backrest of the vehicle seat, so that the child safety seat 1 may be placed in the vehicle more stably. In addition, the child safety seat 1 may further include a headrest 100, which may be configured to be detachably or fixedly connected to an upper part of the backrest 200. Optionally, the child safety seat 1 may further include a base (not shown) for carrying the seat part 200 and the backrest 300 and providing a flat supporting surface. In some examples, the base and the seat part 300 may be separate components or an integrated component, and the present disclosure is not limited thereto. It should be noted that the seat part 300 in the present application may also be considered to include a "base", and the "forward direction" mentioned in the present disclosure refers to a direction in which the vehicle is traveling forward, while a "rearward direction" refers to a direction opposite to the "forward direction".

In order to stably and firmly install the child safety seat 1 on the vehicle seat, the child safety seat 1 further includes a connection structure that cooperates with corresponding connection points provided on the vehicle. In this embodiment, the connection structure includes a seat connecting device (also referred to as a "connecting device") and a top tether device 500. In this embodiment, an ISOFIX device 400 is used as an example of the seat connecting device. As can be seen from FIGS. 1 and 2, the ISOFIX device 400 of this embodiment is movably disposed on the seat part 300. For example, at least a part of the ISOFIX device 400 (such as an ISOFIX connector or a part connected to the vehicle seat) may slidably extend or retract relative to the seat part 300 to adjust a distance between the rear part of the child safety seat 1 and the vehicle seat. The ISOFIX device 400 has an extended position where at least a part of the ISOFIX device 400 extends out of the seat part 300 (FIG. 1) and a retracted position where the at least a part of the ISOFIX device 400 retracts into the seat part (FIG. 2), to be connected to the ISOFIX anchor point on the vehicle seat when installing the child safety seat 1 and to be stored when the child safety seat 1 is not in use. FIG. 1 shows the ISOFIX device 400 in the extended position, where a part of the top tether device 500 is received in a housing of the backrest 200. FIG. 2 shows the ISOFIX device 400 in the retracted position, where the part of the top tether device 500 exposed from the housing of the backrest 200 is longer than that in FIG. 1. In addition, the seat connecting device may also include other types of connectors such as LATCH hooks, as long as it can connect the child safety seat 1 to the vehicle seat and adjust the distance between the child safety seat 1 and the vehicle seat.

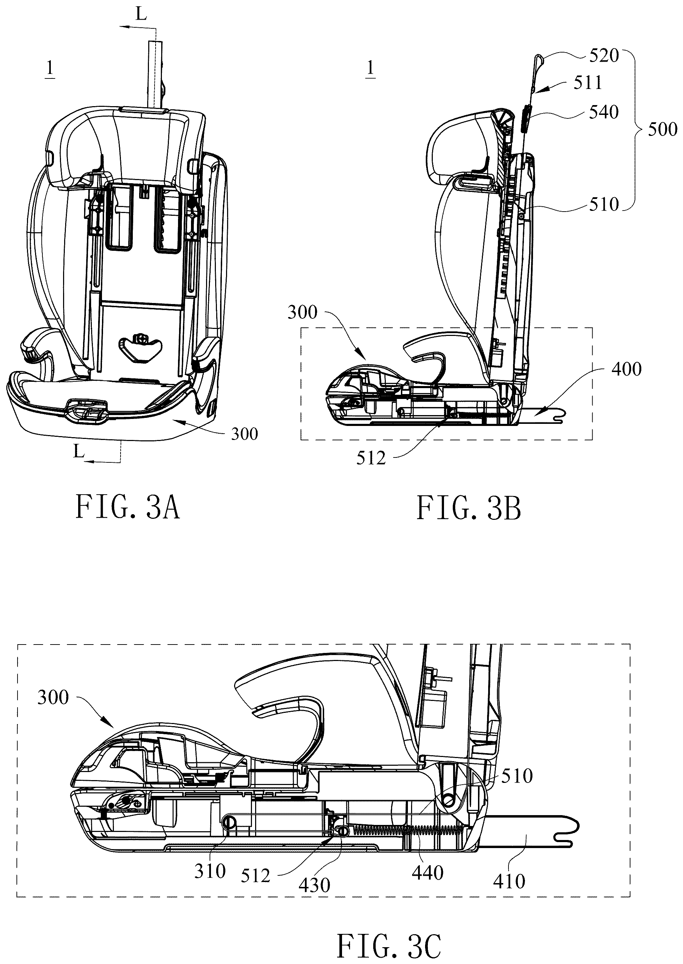

Specifically, referring to FIGS. 3B and 3C, this embodiment is described by taking the ISOFIX connecting device 400 with an ISOFIX connector 410 (also an example of a "connector") as an example. The ISOFIX connector 410 is disposed on the seat part 300 of the child safety seat 1, for example, movably connected to the seat part 300. The ISOFIX connector 410 extends outward from the seat part 300 (see the extended position in FIG. 1) to be connected to the ISOFIX anchor point on the vehicle seat, or retracts inward relative to the seat part 300 (see the retracted position in FIG. 2). The top tether device 500 is movably disposed on the child safety seat 1 and at least partially exposed outside the child safety seat 1. In one example, at least a part of the top tether device 500 is located in the backrest 200 of the child safety seat 1 (for example, inside the housing of the backrest 200), and one end of the top tether device 500 extends from the backrest 200 to cooperate with a corresponding connection point on the vehicle, such as a buckle on the vehicle seat or other structures fixed on the vehicle or the vehicle seat, to stabilize the child safety seat 1. Specifically, at least a part of the top tether device 500 may extend in a longitudinal direction inside the backrest 200, and one end thereof extends from the upper end of the backrest 200. A connection position between the top tether device 500 and the vehicle is different from that between the ISOFIX device 400 (or other connecting devices) and the vehicle, to further stably install the child safety seat 1 on the vehicle seat through multiple fixing points. For example, referring to FIGS. 1 and 2, the top tether device 500 may be pulled from the backrest 200 to different positions (for example, a length thereof extending from the backrest 200 is different) to be suitable for different connection methods or adapt to different models of vehicles. In other examples, the child safety seat 1 may further include a bracket or a lever (not shown) disposed behind the backrest 200 to support the seat part 300 and/or the backrest 200, and the top tether device 500 may also be disposed on the bracket or the lever, and the present disclosure is not limited thereto. The specific structures of the ISOFIX device 400 and the top tether device 500 will be described below.

In this embodiment, the top tether device 500 and the ISOFIX device 400 are linked with each other. For example, one end of the top tether device 500 is connected to the ISOFIX device 400, and when the top tether device 500 is pulled outward from the backrest 200, the ISOFIX connector 410 of the ISOFIX device 400 moves inward relative to the seat part 300 (for example, the length thereof extending from the seat part 300 is shortened). As shown in FIG. 1, when the ISOFIX device 400 is in the extended position, the top tether device 500 is in a released state. As the top tether device 500 is pulled outward from the housing of the backrest 200 (for example, pulled from the released state in FIG. 1 to a stretched state in FIG. 2), the ISOFIX connector 410 retracts inward relative to the seat part 300 until the backrest 200 of the child safety seat 1 may closely cooperate with the backrest of the vehicle seat (for example the retracted position shown in FIG. 2), which can improve the use safety. The specific connection method between the top tether device 500 and the ISOFIX device 400 and the linkage method with the ISOFIX connector 410 will be described below in combination with the structures thereof. It should be noted that the "extended position" of the ISOFIX device 400 shown in FIG. 1 is a state where the ISOFIX connector 410 extends the longest from the seat part 300, and the "retracted position" of the ISOFIX device 400 shown in FIG. 2 is a state where the ISOFIX connector 410 retracts the shortest relative to the seat part 300. However, it should be understood that when the child safety seat 1 is stably installed on the vehicle seat, that is, when the backrest 200 abuts against the backrest of the vehicle seat, a position of the ISOFIX connector 410 may be any position between the "extended position" and the "retracted position" (including the two positions), and is not limited to the "retracted position", which depends on the type of the vehicle or the vehicle seat and the connection method thereof. Similarly, the top tether device 500 is not limited to the positions defined by the above-mentioned stretched state and released state, but exceed the position of the stretched state as shown or any position between the positions shown in the aforementioned two states according to the specific position of the connecting device and/or its elastic performance, which will not be repeated herein.

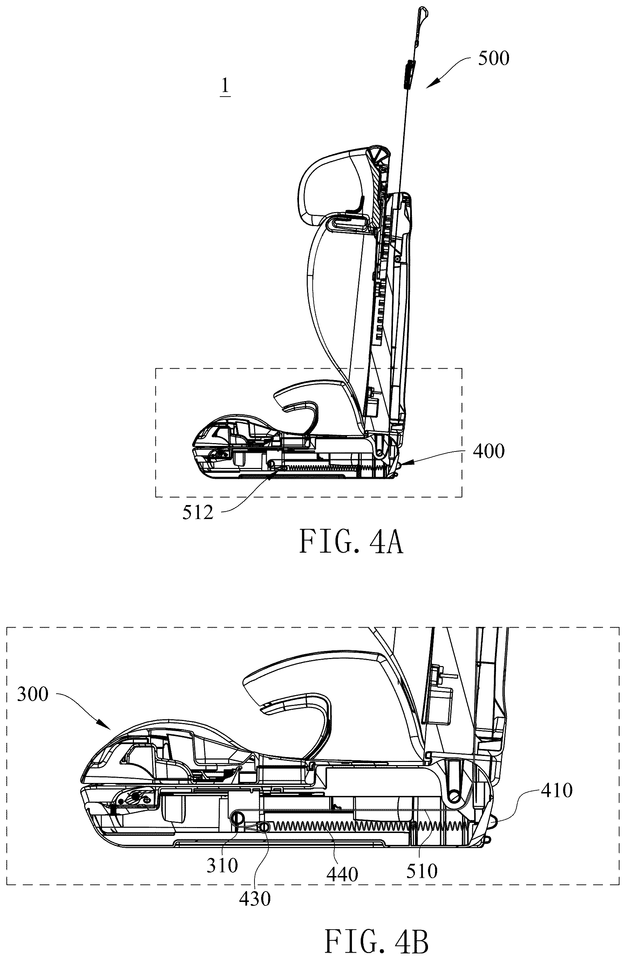

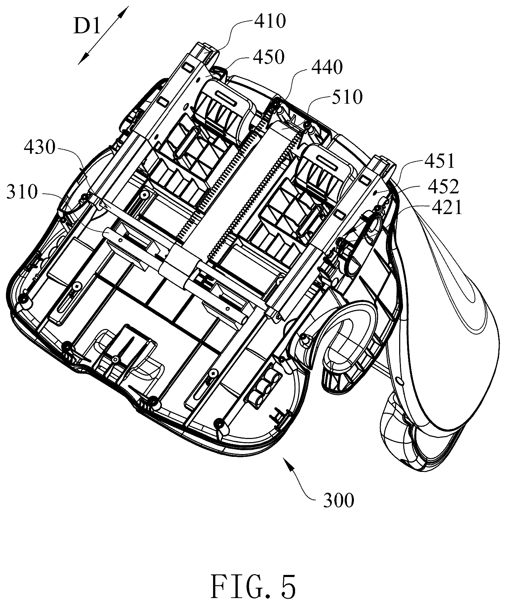

Referring to FIGS. 3A to 5, FIG. 3A shows a perspective schematic view of the child safety seat 1 viewed from another angle, and FIGS. 3B and 3C show a cross-sectional schematic view and a partially enlarged view taken along line L-L in FIG. 3A, the ISOFIX device 400 is in the extended position and the top tether device 500 is in the released state; FIGS. 4A and 4B show a side cross-sectional view of the child safety seat 1 shown in FIG. 2, the ISOFIX device 400 is in the retracted position and the top tether device 500 is in the stretched state; and FIG. 5 shows an internal structure of the seat part 300 of the child safety seat 1.

In combination with FIGS. 3C, 4B and 5, the ISOFIX device 400 may include a plurality of ISOFIX connectors 410 and a connecting bar 430. Two ISOFIX connectors 410 are shown in FIG. 5, but the present disclosure is not limited thereto. The connecting bar 430 is connected between the plurality of (e.g., two) ISOFIX connectors 410 to enable the plurality of (e.g., two) ISOFIX connectors to move synchronously. Specifically, the connecting bar 430 may be disposed at the other end of each ISOFIX connector 410 away from the extending end. In addition, the ISOFIX device 400 may further be provided with an elastic device 440 for providing a force to extend the ISOFIX connector 410 out of the seat part 300, that is, biasing the ISOFIX connector 410 toward the extending (for example, extended position) direction. A first end of the elastic device 440 is connected to the seat part 300, and a second end of the elastic device 440 is connected to the ISOFIX connector 410 and/or the connecting bar 430, or any part of the ISOFIX device 400 that may move the ISOFIX connector 410. In one example, the second end of the elastic device 440 is connected to the connecting bar 430. Optionally, the elastic device 440 is a tension spring. The first end of the tension spring is connected to a position of the seat part 300 close to the vehicle seat (for example, a rear end of the bottom cover of the seat part 300), and the second end is connected to the connecting bar 430. When the tension spring is released or nearly released, the ISOFIX device 400 is maintained in the extended position. In conjunction with FIGS. 4A-5 when the connecting bar 430 is driven to retract the ISOFIX connector 410 into the seat part 300, the tension spring is stretched to provide a force for the ISOFIX connector 410 to extend, thereby keeping the top tether device 500 linked with the ISOFIX connecting device 400 in an extended state. Optionally, one elastic device 440 may be provided, or two or more elastic devices 440 may be provided (as shown). In other examples, the elastic device may also be a compression spring, and the present disclosure is not limited thereto. In other examples, the elastic device 440 may also be replaced with a pulling ring structure. For example, one end of the pulling ring structure is connected to the ISOFIX connector 410 and/or the connecting bar 430, and the other end of the pulling ring structure is in a pulling ring shape and may extend from the seat part 300 for the user to pull, thereby functioning to extend the ISOFIX connector 410 from the child safety seat 1.

In combination with FIGS. 3B, 3C, 4A and 5, the top tether device 500 includes a tether body 510 having a first connecting end 511 (for example, an upper end) and a second connecting end 512 (for example, a lower end). The first connecting end 511 extends outward (for example, upward or rearward) from the backrest 200 of the child safety seat 1 to be connected to a corresponding connection point provided on the vehicle. The second connecting end 512 is connected to the ISOFIX device 400. Specifically, an anchor member 520, such as a hook, is provided at the first connecting end 511. The anchor member 520 may be non-detachably connected to the first connecting end 511 (for example, by sewing) or detachably connected to the first connecting end 511. The second connecting end 512 extends downward along the backrest 200 to the seat part 300, and is connected to the ISOFIX device 400 at the seat part 300 to synchronously link the top tether device 500 with the ISOFIX device 400. In one example, the second connecting end 512 of the tether body 510 is connected to the connecting bar 430. Optionally, the second connecting end 512 of the tether body 510 may be directly connected to the ISOFIX device 400 (for example, the connecting bar 430), for example, by sewing and/or bonding to form an annular structure around the connecting bar 430 at the second connecting end 512 of the tether body 510, but the present disclosure is not limited thereto. A connecting member may also be provided at the second connecting end 512 for detachably or non-detachably connecting to the ISOFIX device 400. In addition, the tether body 510 may be formed by a single strap or two straps connected to each other. For example, the tether body 510 may include a first tether body extending at the backrest 200 and a second tether body extending at the seat part 300, and the first tether body and the second tether body may be detachably connected by a connecting member (for example, the hook). In this way, when the backrest 200 and the seat part 300 are detached from each other, the first tether body and the second tether body may also be separated from each other. It should also be noted that the "connection point provided on the vehicle" is not limited to a point or structure provided on the vehicle seat (for example, an anchor point behind the vehicle seat), but may also be a point or structure provided at other positions on the vehicle.

When the first connecting end 511 of the top tether device 500 is pulled outward from the backrest 200, the second connecting end 512 drives the ISOFIX connector 410 to move toward the retracted position relative to the seat part 300. Specifically, when the child safety seat 1 is installed on the vehicle seat, the ISOFIX device 400 is first adjusted to the extended position, and the tether body 510 of the top tether device 500 is not in use and thus is in a released state; the ISOFIX device 400 is engaged with the anchor point under the backrest of the vehicle seat; the top tether device 500 is pulled outward from the backrest 200, the anchor member 520 at the first connecting end 511 is engaged with the connection point of the vehicle, and the length of the tether body 510 is adjusted to tension the tether body 510, thereby driving the ISOFIX connector 410 to retract relative to the child safety seat 1 (for example, move to the retracted position), so that the child safety seat 1 can tightly abut against the backrest of the vehicle seat. Thus, the child safety seat 1 is installed on the vehicle seat.

More specifically, as shown in FIGS. 3B and 3C, when the tether body 510 of the top tether device 500 is not tensioned, the ISOFIX connector 410 extends the longest from the seat part 300 under the action of the elastic device 440 (for example, in the extended position) to facilitate installing the ISOFIX device 400 on the vehicle seat. After the installation of the ISOFIX device 400 is completed, the tether body 510 is pulled to install the top tether device 500 to the corresponding connection point on the vehicle (for example, the anchor point on the back of the backrest of the vehicle seat). As further combined with FIGS. 4A and 4B, as the tether body 510 of the top tether device 500 is pulled, the tether body 510 may drive the movement of the ISOFIX device 400, causing the ISOFIX connector 410 to retract into the seat part 300, thereby driving the child safety seat 1 to gradually approach the backrest of the vehicle seat until the backrest 200 of the child safety seat 1 abuts against the backrest of the vehicle seat. Then, the anchor member 520 provided at the first connecting end 511 of the tether body 510 is connected to the corresponding connection point on the vehicle to complete the installation of the top tether device 500. Thus, the child safety seat 1 is more stably fixed on the vehicle seat through both the ISOFIX device 400 and the top tether device 500.

In one example, the tether body 510 may be an inelastic strap or have low elasticity. In addition, the top tether device 500 further includes a length adjuster 540 disposed between the first connecting end 511 and the second connecting end 512 for adjusting the length of the tether body 510, thereby realizing the tensioning of the tether body 510.

Through the ISOFIX device 400 and the top tether device 500 arranged in such a linked manner, the locking mechanism for adjusting the length of the ISOFIX device 400 (for example, a locking mechanism with multi-stage adjustment) can be omitted, the structure is simplified, and the cost is reduced. Moreover, when the top tether device 500 is pulled, the ISOFIX device 400 may be synchronously driven to adjust to a suitable position, realizing stepless adjustment of the extending length of the ISOFIX device, which is simple and convenient to be operated, and easier to adapt to different models of vehicles or different connection methods with vehicle seats. Furthermore, since installing only the ISOFIX device 400 without installing and tensioning the top tether device 500 will result in the inability to lock the extending length of the ISOFIX device 400, such arrangement can also effectively prevent the user from missing the installation of the top tether device 500, thereby improving the use safety.

In addition, as shown in FIG. 5, the child safety seat 1 further includes a sliding sleeve 450 for guiding the movement of the ISOFIX connector 410. The sliding sleeve 450 is fixedly provided on the child safety seat 1, such as a reinforcing tube inside the sliding sleeve (e.g., a reinforcing tube inside the seat part 300). The ISOFIX connector 410 may be disposed in the sliding sleeve 450 and capable of sliding relative to the sliding sleeve 450. In one example, the sliding sleeve 450 may be configured to at least accommodate and support at least a part of the ISOFIX connector 410 along the length direction D1, and the ISOFIX connector 410 may slide relative to the sliding sleeve 450 along the length direction D1. Optionally, a plurality of sliding sleeves 450 may be provided on the seat part 300, corresponding to the plurality of ISOFIX connector 410 respectively, i.e., each sliding sleeve 450 corresponds to one ISOFIX connector 410. It should be noted that two sliding sleeves 450 are shown in FIG. 5, but the present disclosure is not limited thereto, and the number can also be adjusted according to the number of ISOFIX connectors 410. Referring to FIGS. 3C, 4B and 5, the child safety seat 1 may further be provided with a guide member 310 for guiding the extending or pulling direction of the top tether device 500, so that the top tether device 500 may pull the ISOFIX connector 410 and/or the connecting bar 430 along the length direction D1. The guide member 310 is fixedly provided on the child safety seat 1, for example, fixedly connected to the seat part 300 by screws or the like, or is a part of the housing of the seat part 300, but the present disclosure is not limited thereto. The guide member 310 may also be pivotally provided in the child safety seat 1, for example, pivot around its axis. The tether body 510 may extend downward through the backrest 200 into the seat part 300, then bypass the guide member 310 and be connected to the connecting bar 430 of the ISOFIX device 400 (or directly connected to the ISOFIX connector 410). In one example, the guide member 310 may be disposed on the front side of the ISOFIX device 400, that is, when the child safety seat 1 is installed on the vehicle seat, the guide member 310 is positioned farther from the backrest of the vehicle seat than the ISOFIX device 400. In addition, as shown in FIG. 4B, a height of the guide member 310 in the vertical direction may be greater than a height of the connecting bar 430 to avoid interference between the tether body 510 and the connecting bar 430 (or even the entire ISOFIX device 400) when bypassing the guide member 310. However, the present disclosure is not limited thereto, and in other examples, the guide member 310 may also be located at the same height as the connecting bar 430 (or the ISOFIX device 400).

In one example, the guide member 310 may be a crossbar disposed in the seat part 300 of the child safety seat 1 along a horizontal direction. The crossbar may be arranged parallel to the connecting bar 430 of the ISOFIX device 400. Optionally, the crossbar may be located at a different height in the vertical direction (for example, relative to the bottom of the child safety seat 1) from the connecting bar 430, for example, the height of the crossbar in the vertical direction is greater than the height of the connecting bar 430 in the vertical direction. However, the present disclosure is not limited thereto, and the crossbar may also have the same height as the connecting bar 430 in the vertical direction. In addition, in other examples, the guide member 310 may also be other elements, such as a roller, a roller shaft, etc.

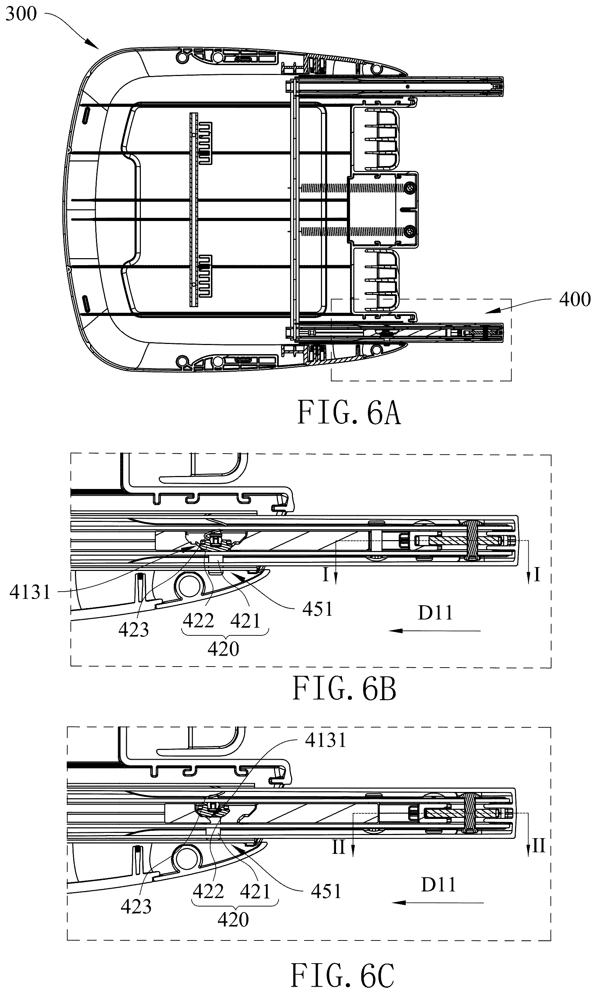

Further referring to FIGS. 6A to 6C, FIG. 6A shows a schematic view of the seat part 300 including a partial cross-sectional view of the ISOFIX device 400 in the extended position; FIGS. 6B and 6C respectively show cross-sectional views of the locking structure of FIG. 6A in a locked position and an unlocked position.

In this embodiment, the ISOFIX device 400 may further be provided with a locking structure that may operably lock the ISOFIX device 400 (specifically, its ISOFIX connector 410) in the extended position to prevent the ISOFIX connector 410 from retracting due to abutting against the backrest of the vehicle seat before being connected to the anchor point of the vehicle seat. The locking structure has a locked position and an unlocked position. When the locking structure is in the locked position, the ISOFIX connector 410 of the ISOFIX device 400 is locked relative to the seat part 300 of the child safety seat 1. When the locking structure is in the unlocked position, the ISOFIX connector 410 may move relative to the seat part 300 of the child safety seat 1. Optionally, the locking structure may also lock the ISOFIX device 400 in the retracted position to reduce a transportation volume of the child safety seat 1 when not in use.

Referring to FIGS. 5, 6B and 6C, the locking structure includes a locking device 420 and a positioning hole. In one example, the locking device 420 is movably disposed on the ISOFIX connector 410, for example, disposed in the ISOFIX connector 410 and having at least a part capable of extending from the ISOFIX connector 410. When the locking structure is in the locked position, the locking device 420 is engaged with the positioning hole to lock the ISOFIX connector 410 relative to the child safety seat 1; when the locking structure is in the unlocked position, the locking device 420 is disengaged from the positioning hole to enable the ISOFIX connector 410 to move relative to the child safety seat 1. The positioning hole may be provided at the seat part 300 of the child safety seat 1, or further provided on a structure fixedly connected to the seat part 300, for example the sliding sleeve 450 shown in FIG. 5.

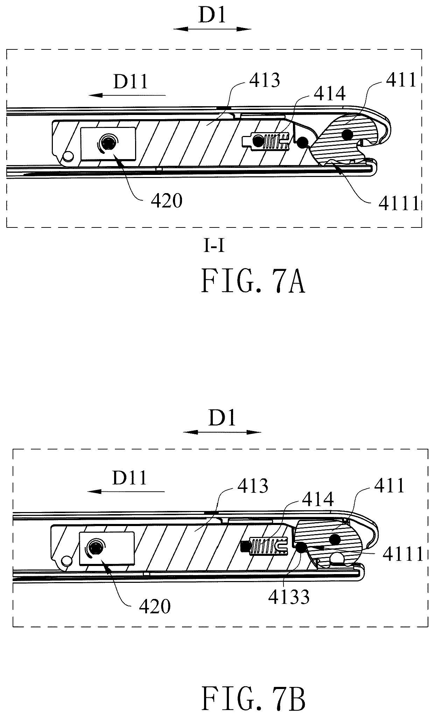

Specifically, referring to FIGS. 5, 6B and 6C, the positioning hole may include a first positioning hole 451 disposed on the sliding sleeve 450 (e.g., the rear end of the sliding sleeve 450). Referring to FIGS. 6A and 7A, when the child safety seat 1 is not installed on the vehicle seat, the ISOFIX device 400 is in the extended position under the action of the elastic device 440, and at this time, the locking device 420 is engaged with the first positioning hole 451 to maintain the ISOFIX device 400 in the extended position, so that the ISOFIX connector 410 will not retract due to contact with the vehicle seat. Referring to FIGS. 6B and 7B, after the ISOFIX device 400 is connected to the vehicle seat, the locking device 420 is disengaged from the first positioning hole 451, enabling the ISOFIX connector 410 to slide relative to the seat part 300 of the child safety seat 1. Optionally, the locking structure may further include a reset spring 423 disposed between the child safety seat 1 (or the sliding sleeve 450) and the locking device 420 to provide a force for the locking device 420 to move toward the locked position, to cause the locking device 420 to be engaged with the first positioning hole 451, so that the locking device 420 can maintain engagement with the first positioning hole 451 under the action of the reset spring 423 before the ISOFIX device 400 is in the extended position and not connected to the vehicle seat.

By providing such a locking structure, before installing the child safety seat 1 on the vehicle seat, the ISOFIX connector 410 may automatically slide toward the extended position under the action of the elastic device 440 until it slides to the position where the locking device 420 is aligned with the first positioning hole 451 (i.e., the locked position), and the locking device 420 is engaged with the first positioning hole 451 under the action of the reset spring 423, thereby locking the ISOFIX connector 410 in the extended position. When the ISOFIX connector 410 is connected to the connection point (for example, an ISOFIX anchor point) on the vehicle seat, the locking structure is in the unlocked position, and the locking device 420 is disengaged from the first positioning hole 451, so that the ISOFIX device 400 may slide relative to the seat part 300 to further adjust the position of the child safety seat 1 relative to the backrest of the vehicle seat.

Further referring to FIGS. 7A and 7B, FIGS. 7A and 7B respectively show partial cross-sectional views of the ISOFIX device 400 engaged with and disengaged from the connection point on the vehicle seat. Specifically, the ISOFIX device 400 in FIG. 7A is not engaged with the vehicle seat, that is, in a disengaged state, while the ISOFIX device 400 in FIG. 7B is engaged with the vehicle seat, that is, in an engaged state.

As shown in FIGS. 7A and 7B, the ISOFIX device 400 is provided with an engaging member 411 and a driving member 413. The engaging member 411 is pivotally provided on the ISOFIX device 400 (for example, ISOFIX connector 410) for engaging with the connection point on the vehicle seat. The driving member 413 is slidably disposed on the ISOFIX device 400 and is in linkage cooperation with the engaging member 411. When the engaging member 411 is connected to the connection point on the vehicle seat and pivots, the driving member 413 drives the locking structure to unlock following the pivoting of the engaging member 411. Specifically, the engaging member 411 is located at the end of the ISOFIX connector 410 extending from the child safety seat 1. In one example, the engaging member 411 may be pivotally connected to the inside of a housing of the ISOFIX connector 410, and an opening is provided on the housing, through which at least a part of the engaging member 411 extends to be engaged with the ISOFIX anchor point. Optionally, the engaging member 411 may be a hook and rotate clockwise for engagement. However, the present disclosure is not limited thereto. The driving member 413 is slidably disposed inside the housing of the ISOFIX connector 410. One end of the driving member 413 is in linkage cooperation with the engaging member 411. For example, the driving member 413 and the engaging member 411 may have shapes matching each other, so that the engaging member 411 when pivoting may push the driving member 413 to slide along the length direction D1 of the ISOFIX device 400, or the driving member 413 can slide along the length direction D1 of the ISOFIX device 400 as the engaging member 411 rotates.

In addition, a driving member reset member 414 is disposed between the driving member 413 and the ISOFIX device 400 for biasing the driving member 413, for example, providing a force to push the driving member 413 toward the engaging member 411. As shown in FIGS. 7A and 7B, when the engaging member 411 rotates clockwise to engage with the ISOFIX anchor point on the vehicle seat, the driving member 413 moves toward the direction close to the engaging member 411 (for example, in the direction opposite to D11 as shown) under the action of the driving member reset member 414, to unlock the locking device 420.

In one example, the driving member 413 may have a first guiding surface 4131. As shown in FIGS. 6B and 6C, as the driving member 413 moves toward the direction close to the engaging member 411, the locking device 420 moves upward along the first guiding surface 4131, thereby being disengaged from the first positioning hole 451. In one example, the locking device 420 includes a locking member 421 and a fixed seat 422. The fixed seat 422 is fixedly connected to the locking member 421 and has a shape matching with the first guiding surface 4131, such as an inverted right trapezoid or an inverted trapezoid, so that the locking device 420 may be offset upward relative to the driving member 413, for example, along the direction D11 as shown, thereby being disengaged from the first positioning hole 451. In this example, the reset spring 423 may be disposed between the fixed seat 422 and the child safety seat 1, but the present disclosure is not limited thereto, and it may also be disposed between the locking member 421 and the child safety seat 1.

Referring to FIGS. 6B to 7B, when the engaging member 411 is engaged with the connection point on the vehicle seat, the driving member 413 moves toward a direction close to the engaging member 411 (moving to the right as shown) following the pivoting of the engaging member 411, driving the locking device 420 to be disengaged from the first positioning hole 451, so that the ISOFIX connector 410 may slide (for example, retract) relative to the child safety seat 1. More specifically, when the ISOFIX device 400 is engaged with the connection point on the vehicle seat, the engaging member 411 rotates clockwise due to the structure at the connection point, thereby driving the driving member 413 to move toward the direction close to the engaging member 411 (for example, through an acting force of the driving member reset member 414). At this time, the first guiding surface 4131 of the driving member 413 moving toward the engaging member 411 drives the locking device 420 (for example, the fixed seat 422) to move upward and disengage from the first positioning hole 451, so that the sliding of the ISOFIX device 400 is not restricted. In this way, the user can pull the top tether device 500 (refer to FIGS. 3B, 3C and 5) to drive the ISOFIX connector 410 to slide, thereby adjusting the length of the ISOFIX connector 410 extending from the seat part 300 of the child safety seat 1.

In addition, a torsion spring (not shown) may be provided on the engaging member 411 to bias the engaging member 411 toward the direction of unlocking the ISOFIX device 400, that is, to provide a force for the engaging member 411 to rotate counterclockwise.

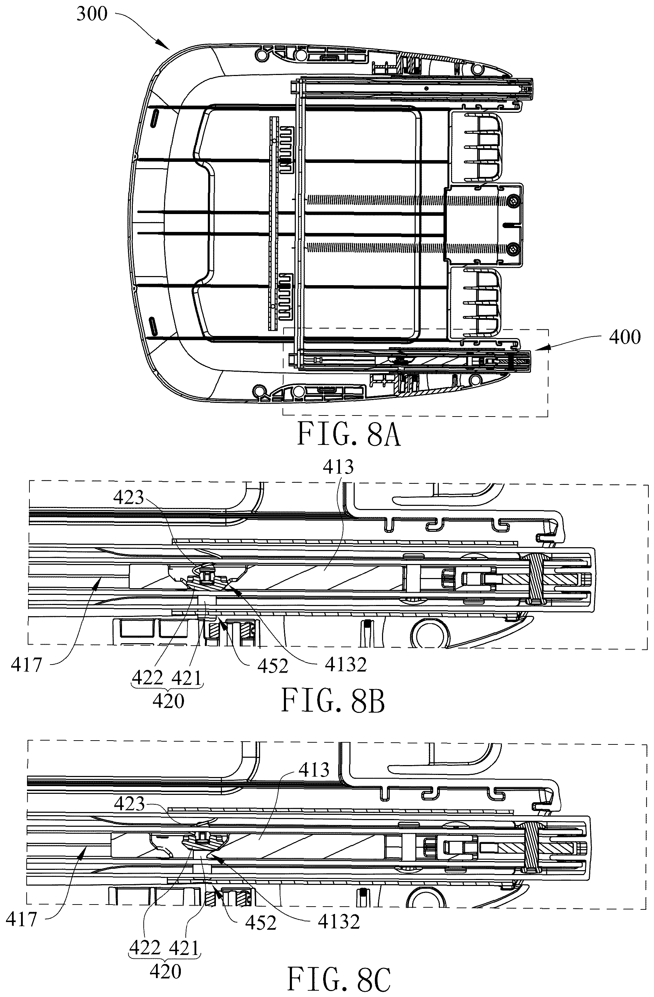

Referring to FIGS. 8A to 9B, FIG. 8A shows another schematic view of the seat part 300 including a partial cross-sectional view of the ISOFIX device 400 in the retracted position; FIGS. 8B and 8C respectively show cross-sectional views of a locking structure of FIG. 8A in the locked position and the unlocked position; and FIGS. 9A and 9B respectively show different examples of the child safety seat 1 having an unlocking operation member 416.

Referring to FIGS. 5, 8B and 8C, the positioning hole may further include a second positioning hole 452. The second positioning hole 452 may also be disposed on the sliding sleeve 450. When the locking device 420 is engaged with the second positioning hole 452, the ISOFIX device 400 is maintained in the retracted position to prevent the ISOFIX connector 410 from automatically extending during transportation and storage of the child safety seat 1. In one example, the driving member 413 may further have a second guiding surface 4132. As shown in FIGS. 8B and 8C, as the driving member 413 moves toward the direction away from the engaging member 411 (for example, the direction D11 as shown in FIGS. 6A and 6B), the locking device 420 moves upward along the second guiding surface 4132, thereby being disengaged from the second positioning hole 452. In this example, the fixed seat 422 may have a shape matching with both the first guiding surface 4131 and the second guiding surface 4132, such as an inverted trapezoid.

Further, referring to FIGS. 8B to 9B, the ISOFIX device 400 further includes a pulling member 417 and an unlocking operation member 416. The unlocking operation member 416 is movably disposed on the child safety seat 1 for driving the driving member 413. Optionally, the unlocking operation member 416 may be disposed on the seat part 300 of the child safety seat 1. For example, as shown in FIGS. 9A and 9B, the unlocking operation member 416 may be disposed on the front side or either side of the child safety seat 1, and/or only one unlocking operation member 416 may be provided, but the present disclosure is not limited thereto. One end of the pulling member 417 is connected to the unlocking operation member 416, and the other end of the pulling member 417 is connected to the driving member 413. Specifically, the pulling member 417 may be a steel wire, but the present disclosure is not limited thereto, and it may also be made of other materials or forms. When the child safety seat 1 needs to be used, the user may operate the unlocking operation member 416 to drive the pulling member 417, so that the driving member 413 moves toward the direction away from the engaging member 411 under the action of the pulling member 417, thereby disengaging the locking device 420 from the second positioning hole 452.

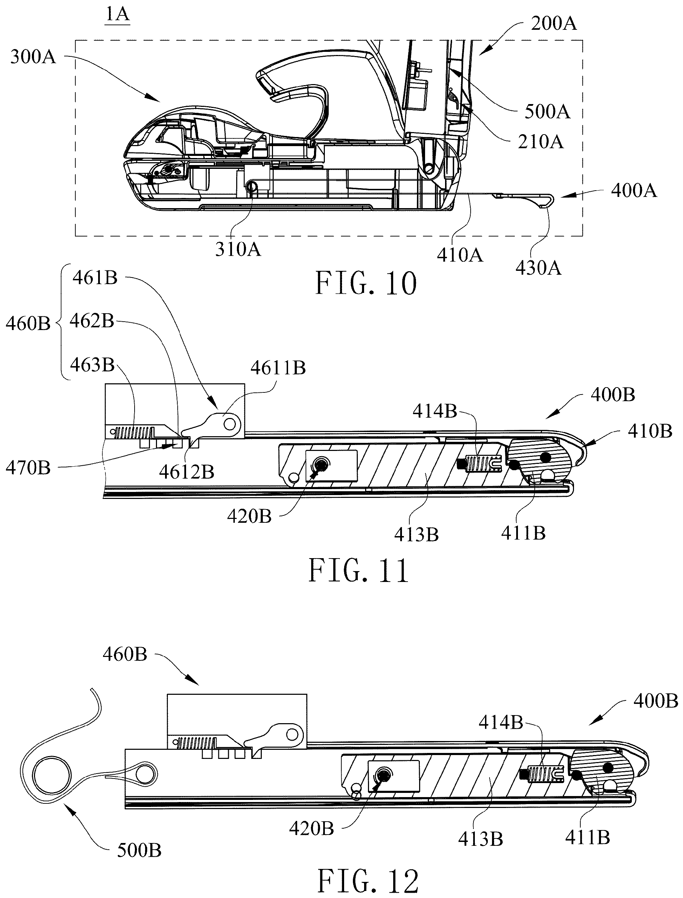

A second embodiment of the present disclosure further provides a child safety seat 1A. Referring to FIG. 10, FIG. 10 shows a partial cross-sectional view of the child safety seat 1A.

The child safety seat 1A has a structure similar to that of the child safety seat 1. For example, the child safety seat 1A includes a backrest 200A and a seat part 300A, but these similar structures will not be repeated herein, and the description will mainly focus on the differences therebetween.

Specifically, as shown in FIG. 10, the connecting device of the child safety seat 1A for cooperating with corresponding connection points provided on the vehicle includes a LATCH device 400A and a top tether device 500A. The LATCH device 400A is movably disposed on the child safety seat 1A and may extend or retract relative to the child safety seat 1A (for example, a length pulled out of the child safety seat 1A is variable) to facilitate cooperation with the connection points on the vehicle. It should be noted that the "connection point provided on the vehicle" is not limited to a point or structure provided on the vehicle seat (for example, an anchor point between the backrest and the seat part of the vehicle seat, or an anchor point behind the vehicle seat, etc.), but may also be a point or structure provided at other positions on the vehicle, and may also include the case where the LATCH device 400A is directly connected to the top tether device 500A at the vehicle seat. Specifically, the LATCH device 400A is configured to extend at least in the seat part 300A of the child safety seat 1A and may extend from the seat part 300A. The LATCH device 400A has a tether body 410A, and a second anchor member 430A is provided at the second connecting end of the tether body 410A and may extend from the seat part 300A. In one example, the second anchor member 430A may be a hook, but the present disclosure is not limited thereto, and it may also have other structures, such as an ISOFIX joint, a buckle, etc.

The top tether device 500A is movably disposed on the child safety seat 1A and at least partially exposed outside the child safety seat 1A. Specifically, at least a part of the tether body 510A of the top tether device 500A extends in the vertical direction inside the backrest 200A. One end thereof (for example, the first connecting end) of the tether body 510A of the top tether device 500A extends from the backrest 200A to be connected to a corresponding connection point on the vehicle. The other end (for example, the second connecting end) of the tether body 510A of the top tether device 500A is connected to the first connecting end of the tether body 410A of the LATCH device 400A to synchronously link the top tether device 500A with the LATCH device 400A.

In one example, the tether body 510A of the top tether device 500A may be non-detachably connected to the tether body 410A of the LATCH device 400A, for example, by sewing. Alternatively, the tether body 510A may be detachably connected to the tether body 410A, for example, by snap fit. For example, the backrest 200A and the seat part 300A are detachably connected. When the backrest 200A is detached from the seat part 300A, the buckle of the tether body 510A may be directly unlocked from the buckle of the tether body 410A, so that the LATCH device 400A may still be used when only the seat part 300A is used. Optionally, the locking part 210A may be disposed at the rear part of the seat part 300A (not shown), close to the connection position of the backrest 200A, and the end of the tether body 410A passes through the rear end of the seat part 300A (for example, the end close to the second anchor member 430A) to facilitate connection and disconnection of the tether body 510A and the tether body 410A. Alternatively, the tether body 510A may be integrally formed with the tether body 410A, that is, it may be the same Y-shaped tether body.

In this embodiment, as shown in FIG. 10, the child safety seat 1A may also be provided with a guide member 310A for guiding the extending or pulling direction of the top tether device 500A and/or the LATCH device 400A (for example, the tether bodies). The arrangement of the guide member 310A is similar to that in the aforementioned first embodiment, and will not be repeated herein.

Optionally, the child safety seat 1A may further be provided with a locking part 210A for locking the tether body 510A of the top tether device 500A. For example, the locking part 210A may be a one-way lock (for example, an A-lock). When the locking part 210A is locked, the tether body 510A may only be pulled upward but not downward.

FIG. 11 shows a schematic view of an ISOFIX device according to a third embodiment of the present disclosure, and FIG. 12 shows a schematic view of an ISOFIX device and a top tether device according to a modified example according to the third embodiment of the present disclosure.

The third embodiment of the present disclosure further provides a child safety seat. The child safety seat has structures similar to those of the aforementioned first embodiment, such as a backrest and a seat part, which will not be repeated herein, and the description will mainly focus on the differences therebetween.

Specifically, the child safety seat of this embodiment further includes a connecting device that cooperates with corresponding connection points provided on the vehicle. The connection structure may include an ISOFIX device 400B, as shown in FIG. 11. The ISOFIX device 400B is provided with a locking structure. When the locking structure is in the locked position, the ISOFIX connector 410B of the ISOFIX device 400B is locked relative to the child safety seat; when the locking structure is in the unlocked position, the ISOFIX connector 410B may be slidable relative to the child safety seat to avoid the situation where the ISOFIX connector 410B retracts when the ISOFIX device 400B is connected to the vehicle seat, resulting in the inability of the ISOFIX device 400B to engage with the connection point on the vehicle seat.

Referring to FIG. 11, the locking structure includes a locking device 420B, a first positioning hole, and an optional reset spring (refer to FIGS. 6B and 6C). The locking device 420B and the first positioning hole may have structures similar to those of the corresponding elements in the aforementioned first embodiment, such as the arrangement position of the first positioning hole and the specific structure of the locking device 420B, which will not be repeated herein. When the locking structure is in the locked position, the locking device 420B is engaged with the first positioning hole; when the locking structure is in the unlocked position, the locking device 420B is disengaged from the first positioning hole.

In addition, similar to the aforementioned first embodiment, as shown in FIG. 11, the ISOFIX device 400B may be provided with an engaging member 411B and a driving member 413B. The engaging member 411B is pivotally connected to the ISOFIX device 400B for engaging with the connection point on the vehicle seat. The driving member 413B is slidably connected to the ISOFIX device 400B, and one end of the driving member 413B is in linkage cooperation with the engaging member 411B. A driving member reset spring 414B is disposed between the driving member 413B and the ISOFIX device 400B to provide a force to push the driving member 413B toward the engaging member 411B. The driving member 413B may have a first guiding surface. As the driving member 413B moves toward the direction close to the engaging member 411B, the locking device 420B moves upward along the first guiding surface (referring to FIGS. 6B, 6C and 11), thereby being disengaged from the first positioning hole, so that the ISOFIX device 400B can slide and retract relative to the child safety seat.

In this embodiment, as shown in FIG. 11, the ISOFIX device 400B further includes a latching device 460B as an alternative or additional element to the "second positioning hole 452" and the "second guiding surface 4132" in the first embodiment. When the latching device 460B is in the unlocked state, the connector 410B of the ISOFIX device 400B can retract relative to the child safety seat but is not allowed to extend further outward, that is, cannot extend relative to the seat part 300 of the child safety seat.

Specifically, the latching device 460B may be disposed above the ISOFIX device 400, and the ISOFIX device 400 may move relative to the latching device 460B. In one example, the latching device 460B includes a one-way pawl 461B and an unlocking member 462B. The one-way pawl 461B is pivotally provided on the child safety seat 1 or a fixed structure thereon. The one-way pawl 461B has a main body part 4611B and a clamping finger part 4612B. Correspondingly, the ISOFIX device 400B is provided with a clamping groove 470B, and the one-way pawl 461B may cooperate with the clamping groove 470B. Optionally, a plurality of clamping grooves 470B may be provided. When the one-way pawl 461B is engaged with the clamping groove 470B, the latching device 460B allows the ISOFIX connector 410B to slide toward the folded direction and prevents the ISOFIX connector 410B from sliding toward the unfolded direction. That is, when the clamping finger part 4612B is engaged with the clamping groove 470B, the ISOFIX connector 410B may move only in a direction (single direction) of retracting into the child safety seat (e.g., its seat part 300). For example, the main body part 4611B of the one-way pawl 461B may be pivotable relative to the child safety seat 300, and the clamping finger part 4612B may protrude from a lower surface of the main body part 4611B to be engaged with the corresponding clamping groove 470B. The unlocking member 462B is movably disposed on the seat part 300 of the child safety seat, for example the front end of the seat part, and at least partially exposed for operation. When unlocking is required, the user may operate the unlocking member 462B to disengage the one-way pawl 461B from the clamping groove 470B, so that the ISOFIX connector 410B may freely slide between the extended position and the retracted position relative to the seat part 300 of the child safety seat 1. Specifically, when the unlocking member 462B is operated, it drives the one-way pawl 461B to pivot away from the ISOFIX device 400B, thereby disengaging the clamping finger part 4612B from the clamping groove 470B. At this time, the ISOFIX device 400B may move bidirectionally relative to the child safety seat (and the latching device 460B), that is, may extend and retract. Optionally, the front end of the unlocking member 462B has an inclined surface. When the user operates (for example, pushes) the unlocking member 462B, the inclined surface may push the one-way pawl 461B to pivot upward. In addition, the latching device 460B further includes a reset member 463B for providing a force to restore the unlocking member 462B to the un-operated position.

When the ISOFIX device 400B is in the extended position, that is, pulled out to the maximum length, the locking device 420B locks the sliding of the ISOFIX connector 410B to prevent it from retracting, thereby preventing the ISOFIX connector 410B from retracting in advance due to that the ISOFIX device 400B is in contact with the backrest of the vehicle seat before the engaging member 411B is engaged with the ISOFIX anchor point on the vehicle seat. When the engaging member 411B is engaged with the ISOFIX anchor point on the vehicle seat, the locking device 420B is disengaged from the first positioning hole to unlock the sliding of the ISOFIX connector 410B, so that the ISOFIX connector 410B can retract. At the same time, when the ISOFIX connector 410B retracts to a certain extent, by providing such latching device 460B, the ISOFIX device 400B may be limited within a certain extending length, so that the ISOFIX device 400B can only retract but not extend outward, thereby keeping the child safety seat 1 in a state of abutting against the backrest of the vehicle seat and facilitating storage.

In one modified example, as shown in FIG. 12, the connecting device of the child safety seat of this embodiment may further include a top tether device 500B. The structure, arrangement manner of the top tether device 500B and its connection manner with the ISOFIX device 400B are similar to those of the aforementioned first embodiment, and will not be repeated herein. When the extension of the ISOFIX connector 410B is locked by the latching device 460B, the top tether device 500B may be further tensioned to further retract the ISOFIX connector 410B, thereby making the child safety seat more closely abut against the backrest of the vehicle seat.

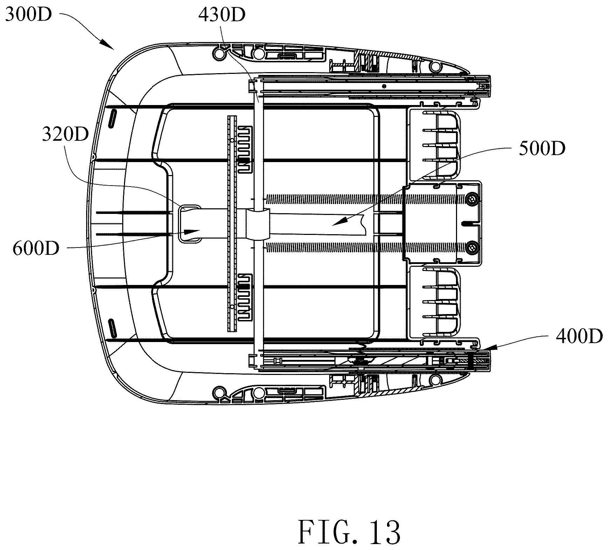

A fourth embodiment of the present disclosure further provides a child safety seat. Referring to FIG. 13, FIG. 13 shows a bottom schematic view of the seat part 300D of the child safety seat.

Specifically, the child safety seat of this embodiment has a structure similar to that of the modified example of the aforementioned first embodiment or third embodiment, but these will not be repeated herein, and the description will mainly focus on the differences therebetween.

As shown in FIG. 13, the child safety seat of this embodiment further includes a crotch strap 600D. One end of the crotch strap 600D is connected to the ISOFIX device 400D, and the other end of the crotch strap 600D passes through the seat part 300D of the child safety seat and is exposed above the seat part 300D. Specifically, the crotch strap 600D may be detachably or non-detachably connected to the connecting bar 430D of the ISOFIX device 400D, or wrapped around the connecting bar 430D. In addition, the seat part 300D is provided with an opening 320D through which the crotch strap 600D passes, for example, disposed at the upper housing of the seat part 300D.

When the top tether device 500D is not tensioned, that is, when the ISOFIX device 400D may extend under the action of the elastic device 440 (see FIG. 5), i.e., in the extended position, the strap part of the crotch strap 600D may be pulled more into the seat part 300D to attract the user's attention, thereby reminding the user to connect the top tether device 500D to the corresponding connection point on the vehicle. Alternatively, the connecting bar 430D may be provided as an independent element, that is, the connecting bar 430D is no longer connected to the ISOFIX device 400D or forms a part of the ISOFIX device 400D. The connecting bar 430D is slidably disposed back and forth in the metal frame of the child safety seat (for example, the metal frame is provided with a sliding groove extending in the front-rear direction, and the end of the connecting bar 430D is inserted into the sliding groove and may slide back and forth along the sliding groove), and the elastic device 440 pulls the connecting bar 430D toward the rear of the seat. When the top tether device 500D is not tensioned, under the action of the elastic device 440, the strap part of the crotch strap 600D may be pulled into the seat part 300D to prompt a caregiver that the top tether device 500D is not properly installed. When the caregiver fixes the top tether device 500D to the anchor point of the vehicle and tensions it, the connecting bar 430D is pulled to the frontmost end of the sliding stroke, and no longer restricts the strap part of the crotch strap 600D from extending from the inside of the seat part 300D, so as to prompt the caregiver that the top tether device 500D has been properly installed.

The above are only preferred examples of the present disclosure, which are convenient for those skilled in the art to understand and implement.

## Claims

1. A child safety seat (1, 1A), comprising:
a backrest (200, 200A);
a seat part (300, 300A, 300D);
a connecting device comprising a connector for engaging an anchor point of a vehicle seat, wherein the connector is disposed on the seat part (300, 300A, 300D) and is slidable between an extended position and a retracted position relative to the seat part (300, 300A, 300D); and
a top tether device (500, 500A, 500B) movably disposed on the child safety seat (1, 1A), wherein the top tether device (500, 500A, 500B) comprises a tether body (510, 510A), an anchor member (520), and a length adjuster (540); the tether body (510, 510A) has a first connecting end (511) connected to the anchor member (520) and extending outward from the backrest (200, 200A) and a second connecting end (512) connected to the connecting device; and the length adjuster (540) is disposed between the first connecting end (511) and the second connecting end (512) to adjust a length of the tether body (510, 510A),
wherein the second connecting end (512) drives the connector to move toward the retracted position relative to the seat part (300, 300A, 300D) when the first connecting end (511) of the top tether device (500, 500A, 500B) is pulled outward from the backrest (200, 200A).

2. The child safety seat (1, 1A) according to claim 1, wherein a number of the connectors is plural, the connecting device further comprises a connecting bar (430, 430D), the connecting bar (430, 430D) is connected among the plurality of connectors, and the second connecting end (512) of the tether body (510, 510A) is connected to the connecting bar (430, 430D).

3. The child safety seat (1, 1A) according to claim 1 or 2, wherein the connecting device further comprises:
an elastic device (440) configured to bias the connector in a direction toward the extended position; and
a locking structure operable to lock the connector in the retracted position.

4. The child safety seat (1, 1A) according to any one of claims 1 to 3, wherein the connecting device further comprises:
a locking structure operable to lock the connector in the extended position;
an engaging member (411, 411B) pivotally connected to the connector for engaging a connection point on the vehicle seat; and
a driving member (413, 413B) slidably disposed on the connecting device and in linkage cooperation with the engaging member (411, 411B);
wherein the driving member (413, 413B) drives the locking structure to unlock along with pivoting of the engaging member (411, 411B) when the engaging member (411, 411B) is connected to the connection point on the vehicle seat and pivots.

5. The child safety seat (1) according to claim 4, wherein the locking structure comprises a locking device (420, 420B) disposed on the connector, the seat part (300) of the child safety seat (1) further has a positioning hole for cooperating with the locking device (420, 420B),
when the locking structure is in a locked position, the locking device (420, 420B) is engaged with the positioning hole to lock the connector relative to the seat part (300) of the child safety seat (1); and when the locking structure is in an unlocked position, the locking device (420, 420B) is disengaged from the positioning hole to enable the connector to move relative to the seat part (300) of the child safety seat (1);
the child safety seat (1) further comprises a sliding sleeve (450) fixedly provided on the seat part (300) of the child safety seat (1), the connector of the connecting device is slidable within the sliding sleeve (450), and the positioning hole is disposed on the sliding sleeve (450).

6. The child safety seat (1) according to claim 5, wherein the positioning hole comprises a first positioning hole (451), when the locking device (420, 420B) is engaged with the first positioning hole (451), the connector is maintained in the extended position protruding from the child safety seat (1), and when the engaging member (411, 411B) provided on the connecting device is connected to the vehicle seat, the locking device (420, 420B) is disengaged from the first positioning hole (451), such that the connector is slidable relative to the seat part (300) of the child safety seat (1).

7. The child safety seat (1, 1A) according to claim 6, wherein the driving member (413, 413B) has a first guiding surface (4131), when the engaging member (411, 411B) is engaged with the connection point on the vehicle seat and pivots, the driving member (413, 413B) moves toward a direction close to the engaging member (411, 411B), and the first guiding surface (4131) abuts against the locking device (420, 420B) to disengage the locking device (420, 420B) from the first positioning hole (451).

8. The child safety seat (1) according to claim 7, wherein the positioning hole further comprises a second positioning hole (452),
when the locking device (420, 420B) is engaged with the second positioning hole (452), the connector is maintained in the retracted position,
the child safety seat (1) further comprises an unlocking operation member (416),
the unlocking operation member (416) is movably disposed on the child safety seat (1, 1A) for driving the driving member (413, 413B),
the driving member (413, 413B) has a second guiding surface (4132), the locking device (420, 420B) is configured between the first guiding surface (4131) and the second guiding surface (4132),
when the unlocking operation member (416) is operated, the driving member (413, 413B) moves toward a direction away from the engaging member (411, 411B) under driving of the unlocking operation member (416), such that the second guiding surface (4132) abuts against the locking device (420, 420B) to be disengaged from the second positioning hole (452).

9. The child safety seat (1) according to any one of claims 4 to 8, wherein a driving member reset member (414, 414B) is disposed between the driving member (413, 413B) and the connector, the driving member reset member (414, 414B) biases the driving member (413, 413B),
when the engaging member (411, 411B) is engaged with the vehicle seat, the driving member (413, 413B) moves toward a direction close to the engaging member (411, 411B) under biasing of the driving member reset member (414, 414B), such that the locking device (420, 420B) is unlocked.

10. The child safety seat (1, 1A) according to any one of claims 1 to 9, wherein the child safety seat (1, 1A) is provided with a guide member (310, 310A) fixedly connected to the seat part (300, 300A, 300D) and located in front of the connecting device, and after the tether body (510, 510A) of the top tether device (500, 500A, 500B) bypasses the guide member (310, 310A), the second connecting end (512) is connected to the connecting device.

11. The child safety seat (1A) according to claim 1, wherein the connecting device comprises a LATCH device (400A), the LATCH device (400A) has one end connected to the second connecting end (512) of the tether body (510A), and the other end provided with a hook and capable of extending or retracting relative to the seat part (300A) of the child safety seat (1, 1A).

12. The child safety seat (1A) according to claim 11, wherein the backrest (200A) is detachably connected to the seat part (300A), and the LATCH device (400A) is detachably connected to the tether body (S10A) of the top tether device (500A).

13. The child safety seat (1) according to claim 1, wherein the seat part (300) further comprises a latching device (460B), the latching device (460B) comprises a one-way pawl (461B) and an unlocking member (462B), and the one-way pawl (461B) is pivotally connected to the seat part (300) and is capable of cooperating with a clamping groove (470B) provided on the connecting device,
when the one-way pawl (461B) is engaged with the clamping groove (470B), the latching device (460B) allows the connector to slide toward the folded direction and prevents the connector from sliding toward the unfolded direction; when the unlocking member (462B) is operated, the one-way pawl (461B) is disengaged from the clamping groove (470B), such that the connector is freely slidable between the extended position and the retracted position relative to the seat part (300) of the child safety seat (1).

14. The child safety seat (1, 1A) according to claim 10, wherein the guide member (310, 310A) is a crossbar, a roller or a roller shaft, and the guide member (310, 310A) is disposed in the seat part (300, 300A, 300D) along a horizontal direction and is positioned farther from the backrest (200A) of the vehicle seat than the connecting device.

15. The child safety seat (1, 1A) according to claim 2, wherein the child safety seat (1, 1A) is provided with a guide member (310, 310A) fixedly connected to the seat part (300, 300A, 300D) and located in front of the connecting device, and after the tether body (510, 510A) of the top tether device (500, 500A, 500B) bypasses the guide member (310, 310A), the second connecting end is connected to the connecting device,
the guide member (310, 310A) is disposed on the front side of the connecting device, and a height of the guide member (310, 310A) in the vertical direction is greater than a height of the connecting bar.
